# DEMANDE DE BREVET EUROPEEN

(11) **EP 1 167 118 A1**
(43) Date de publication de la demande: **02.01.2002**
(21) Numéro de dépôt: 01401536.6
(22) Date de dépôt: 14.06.2001
(51) Int. Cl.: B60N 3/14

(54) **Allume-cigares à sécurité thermique**

(30) Priorité: 22.06.2000 FR 0008040
(71) Demandeur: VALEO VISION, 93012 Bobigny Cédex (FR)
(72) Inventeur: Rostan, Philippe, 93012 Bobigny Cedex (FR)

(57) **Abrégé**

La présente invention concerne un allume-cigares, notamment pour véhicule automobile, comprenant un corps de chauffe (10) et un bouchon (1) destiné à être engagé dans le corps de chauffe (10), ce bouchon (1) comportant
- une résistance chauffante (3), placée dans une cuvette (5) et apte à être électriquement alimentée par un bilame d'alimentation (19) en contact avec la cuvette (5) lorsque le bouchon (1) est enfoncé en position de chauffe,
- ainsi qu'un dispositif de sécurité (7) maintenant le contact électrique avec la cuvette (5), quelque soit la forme du bilame d'alimentation (19), pour continuer d'alimenter la résistance chauffante (3) tant que le bouchon (1) est enfoncé dans le corps de chauffe (10) en position de chauffe,
caractérisé par le fait que le contact électrique entre le dispositif de sécurité (7) et la cuvette (5) s'effectue sur le flanc de la face externe de la cuvette (5).

## Description

L'invention concerne le domaine des allume-cigares, notamment ceux pour véhicules automobiles. Plus précisément, il s'agit d'allume-cigares à sécurité thermique.

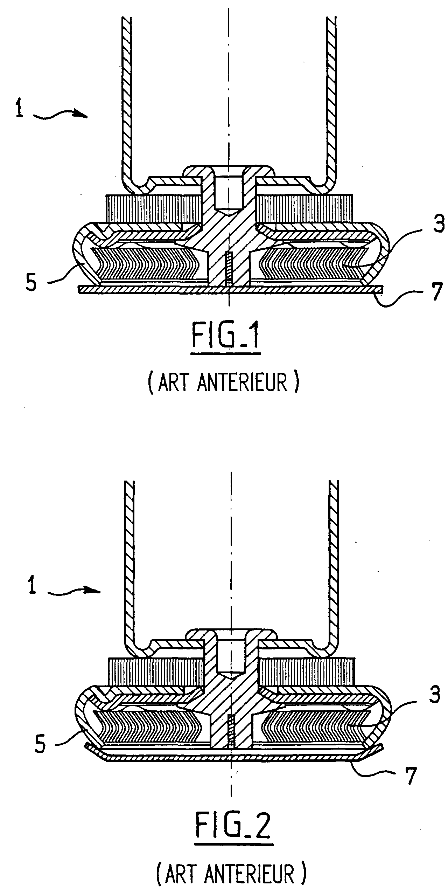

On connaît déjà des allume-cigares de ce type comprenant un corps de chauffe et un bouchon 1 destiné à être engagé dans le corps de chauffe. Ce bouchon 1 comporte une résistance chauffante 3 placée dans une cuvette 5 (voir figures 1 et 2). Cette résistance chauffante est apte à être électriquement alimentée par un bilame d'alimentation en contact avec la cuvette lorsque le bouchon est enfoncé en position de chauffe dans le corps de chauffe. Lors de l'utilisation de cet allume-cigares, on enfonce le bouchon à l'intérieur du corps jusqu'à l'accrochage de la cuvette par le bilame. Lorsque la température de la résistance chauffante est suffisante, le bilame d'alimentation se déforme interrompant le passage du courant dans la résistance chauffante et permettant le relâchement du bouchon qui revient en position de préhension.

Cependant, si une personne ou un objet continue à exercer un effort sur le bouchon pendant la chauffe, ou si un grippage se produit dans le bouchon, ce dernier peut ne plus revenir en position de préhension. Un phénomène cyclique se met alors en place : le bilame d'alimentation se déforme et coupe le contact électrique, l'allume-cigares se refroidit progressivement et le bilame d'alimentation revient alors à sa position initiale, réactivant la chauffe jusqu'à ce que le bilame d'alimentation se déforme à nouveau pour couper la chauffe. Ce cycle se produit jusqu'à ce qu'une intervention extérieure vienne débloquer le bouchon. Pendant tout ce temps le faisceau électrique connecté à l'allume-cigares conduit la chaleur dégagée, par la chauffe cyclique, au niveau du corps de chauffe. Ceci peut entraîner une détérioration de l'isolant des câbles électriques, une détérioration de l'allume-cigares lui-même, ainsi que d'autres sinistres, tel qu'un incendie.

Ce problème est résolu grâce à un bilame de sécurité, installé au fond du corps de chauffe (dans la partie la plus chaude du corps de chauffe) et relié à la borne positive du circuit électrique de l'allume-cigares. Ainsi, si l'allume-cigares devient anormalement chaud, le bilame de sécurité se déforme et vient toucher une pièce métallique reliée à la borne négative du circuit électrique de l'allume-cigares, provoquant ainsi un court-circuit dans l'allume-cigares. Le fusible du véhicule auquel est relié l'allume-cigares fond immédiatement, coupant ainsi l'énergie vers l'allume-cigares. Ce dernier ne chauffe plus et tout risque d'incendie ou de détérioration est écarté. Cependant, pour que l'allume-cigares devienne anormalement chaud, il faut que la résistance chauffante fonctionne en continu si le bouchon est enfoncé, même lorsque le bilame d'alimentation est dans sa configuration déformée correspondant à l'ouverture du contact électrique entre ce bilame d'alimentation et le bouchon.

Cette fonction est assurée par un dispositif de sécurité 7 (connue de l'homme du métier sous l'appellation anglo-saxonne « safety buffer »), qui maintient un contact électrique avec le bouchon 1, quelque que soit la configuration du bilame d'alimentation (figures 1 et 2). La température monte alors très vite dans l'allume-cigares et le bilame de sécurité se déforme pour interrompre la chauffe, par fusion du fusible du véhicule, préservant ainsi l'intégralité du faisceau électrique.

Dans l'état actuel de la technique, les bornes utilisées pour ce dispositif de sécurité 7 sont telles que le contact électrique entre ce dispositif de sécurité 7 et la cuvette 5 s'effectue par le dessous de la cuvette 5, à proximité ou au niveau du bord de l'ouverture de la cuvette 5 par laquelle l'utilisateur accède à la résistance chauffante (figures 1 et 2).

Or le bord de l'ouverture de la cuvette par laquelle l'utilisateur accède à la résistance chauffante correspond à la zone la plus chaude de la cuvette. Cette zone a donc tendance à s'oxyder. En outre, il s'agit d'une zone sur laquelle peuvent se déposer des cendres de cigares ou de cigarettes. Ceci induit une dégradation du contact électrique entre le dispositif de sécurité et la cuvette, susceptible d'entraîner la formation d'arcs électriques. Ces mauvais contacts entraînent alors un apport de chaleur supplémentaire susceptible d'être transmis à la résistance chauffante. Il en découle une dégradation de celle-ci, en particulier par la formation de contacts électriques entre les spires de cette résistance chauffante. Une dégradation très rapide de l'allume-cigares peut lors intervenir.

Un but de l'invention est de prolonger la durée de vie des allume-cigares muni d'un tel dispositif de sécurité.

Ce but est atteint, selon l'invention, grâce à un allume-cigares, notamment pour véhicule automobile, comprenant un corps de chauffe et un bouchon destiné à être engagé dans le corps de chauffe, ce bouchon comportant
- une résistance chauffante, placée dans une cuvette et apte à être électriquement alimentée par un bilame d'alimentation en contact avec la cuvette lorsque le bouchon est enfoncé en position de chauffe,
- ainsi qu'un dispositif de sécurité maintenant le contact électrique avec la cuvette, quelque soit la forme du bilame d'alimentation, pour continuer d'alimenter la résistance chauffante tant que le bouchon est enfoncé dans le corps de chauffe en position de chauffe,
caractérisé par le fait que le contact électrique entre le dispositif de sécurité et la cuvette s'effectue sur le flanc de la face externe de la cuvette.

En effet, grâce à l'invention, le contact électrique entre le dispositif de sécurité et la cuvette est réalisé dans une zone de la cuvette plus éloignée de la résistance chauffante. Ainsi, même si le contact électrique entre le dispositif de sécurité et la cuvette n'est pas optimal, l'apport de chaleur supplémentaire dû à ce mauvais contact, n'est pas directement et immédiatement transmis à la résistance chauffante. Cette dernière est donc préservée des apports excessifs de chaleur, en particulier provenant d'arcs électriques. Sa durée de vie s'en trouve prolongée.

Avantageusement, dans l'allume-cigares selon l'invention, le contact entre le dispositif de sécurité et la cuvette s'effectue à proximité ou au niveau de la partie de la cuvette ayant le diamètre le plus large. En effet, cette zone correspondant au diamètre le plus large de la cuvette est éloignée de la zone où s'effectue le contact entre la résistance chauffante et la cuvette. De cette manière, la résistance chauffante se trouve encore éloignée de la zone de contact entre le dispositif de sécurité et la cuvette.

Avantageusement, le dispositif de sécurité a une forme de lame globalement conformée pour avoir une forme de U en coupe longitudinale. Le contact électrique entre le dispositif de sécurité et la cuvette s'effectue alors au niveau et à proximité des extrémités longitudinales de la lame, tandis que la partie de la lame correspondant au fond du U est éloignée de la résistance chauffante. Ceci permet de limiter la transmission de la chaleur émise par la résistance chauffante, au dispositif de sécurité. Le fait que le dispositif de sécurité ne soit pas ainsi soumis à de trop fortes températures, limite sa corrosion.

Avantageusement, le dispositif de sécurité est en laiton brut de manière à être moins sensible à la corrosion.

Avantageusement encore, le dispositif de sécurité est en contact avec un bilame de sécurité, agencé pour établir un court-circuit dans le circuit électrique de l'allume-cigares, lorsqu'il se déforme sous l'effet de l'excès de chaleur produit au cours d'un disfonctionnement de l'allume-cigares.

Autres aspects, buts et avantages de l'invention seront mieux compris à l'aide de la description détaillée qui suit. L'invention sera également mieux comprise à l'aide des dessins annexés, sur lesquels :
- les figures 1 et 2 représentent un bouchon d'allume-cigares, en coupe schématique, passant par l'axe longitudinal de ce bouchon ;
- la figure 3 représente un allume-cigares conforme à la présente invention, en coupe schématique, passant par son axe longitudinal ;
- la figure 4 représente un détail de l'allume-cigares représenté sur la figure 3, en coupe schématique, passant par son axe longitudinal, le plan de coupe de la figure 4 étant tourné de 90° par rapport au plan de coupe de la figure 3, autour de l'axe longitudinal.

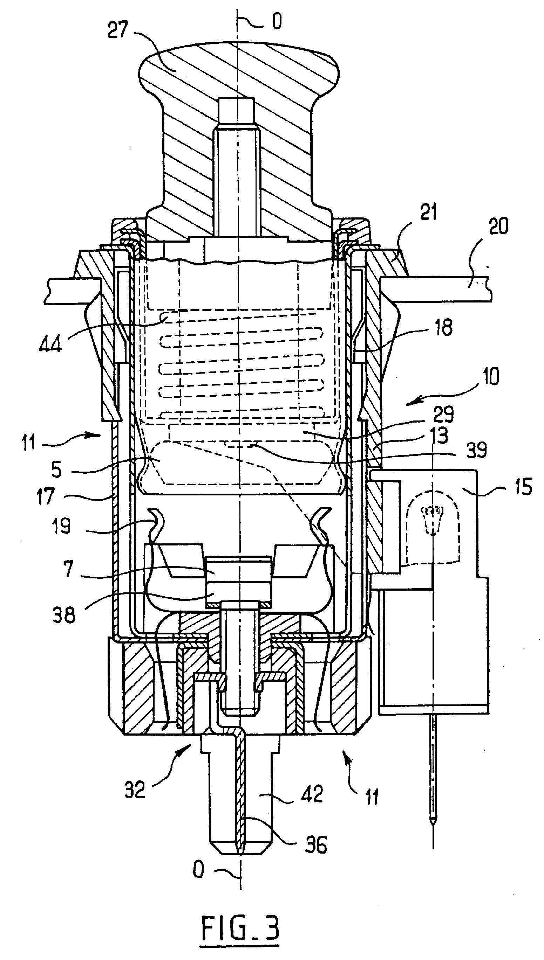

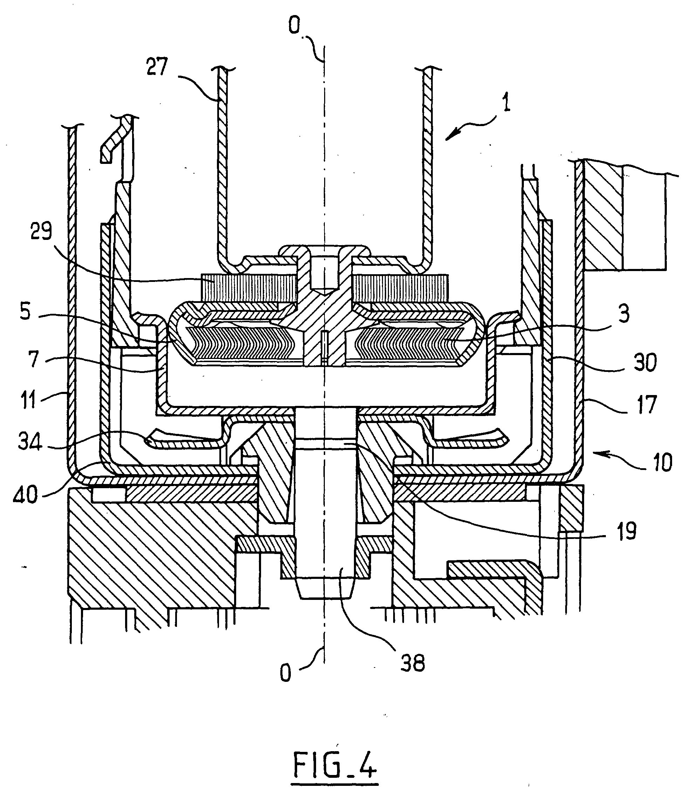

Un mode de réalisation, particulier mais non limitatif, de l'allume-cigares 10 conforme à la présente invention est décrit de manière détaillée ci-dessous en relation avec les figures 3 et 4.

Comme représenté sur la figure 3, il s'agit d'un allume-cigares 10, à encastrer dans une planche de bord 20 d'un véhicule automobile. L'allume-cigares 10 a globalement une géométrie cylindrique, autour d'un axe longitudinal 0-0.

Le bouchon 1 comporte une partie fixe 23 et une partie mobile 25.

La partie mobile 25 comprend une cuvette 5 comportant une résistance chauffante 3 enroulée en spirale, un bouton poussoir 27 et des éléments électriquement et thermiquement isolants 29, intercalés entre la cuvette 5 et le bouton poussoir 27.

On trouvera dans le document FR 2 758 111 une description d'un mode de réalisation de la partie mobile 25.

La partie fixe 23 comporte un corps de chauffe 11, un module de connexion 32, un dispositif de sécurité 7, un bilame d'alimentation 19, un bilame de sécurité 34, une bague éclairante 13 et un module d'éclairage 15 (figure 3).

Le corps de chauffe 11 comporte une douille 17 et un guide cylindrique 18 servant de réceptacle au bouchon 1 et est muni intérieurement d'un bilame d'alimentation 19 pour alimenter électriquement une résistance chauffante 3 enroulée en spirale dans le bouchon 1.

La bague éclairante 13 entoure le corps de chauffe 11, permet la fixation de ce dernier sur la planche de bord 20 et permet d'illuminer une colorette 21 pour le repérage de l'allume-cigares 10 la nuit.

Le module d'éclairage 15 est monté de manière protubérante sur la bague éclairante 13. On trouvera dans le document FR 2 558 111 une description d'un mode de réalisation des corps de chauffe 11, bague éclairante 13 et module d'éclairage 15 tels que ceux mentionnées ci-dessus.

Le guide cylindrique 18 est coaxial à la douille 17 et à l'intérieur de celle-ci. Le module de connexion 32 est disposé à l'extrémité du corps de chauffe 11, opposé à celle d'introduction du bouchon 1. La broche de polarité positive 36 du module de connexion 32 est reliée à une vis centrale 38, elle même électriquement connectée au dispositif de sécurité 7, lui même en contact électrique avec le bilame d'alimentation 19. Le bilame d'alimentation 19 sert à établir un contact électrique avec la cuvette 5 lorsque le bouchon 1 est enfoncé en position de chauffe, et alimente la résistance chauffante 3 qui est elle-même, par sa périphérie, en contact avec la cuvette 5.

La broche de polarité négative 42 du module de connexion 32 est reliée à la douille 11 et au guide cylindrique 30.

La boucle d'alimentation de l'allume-cigares est refermée par le bouchon poussoir 27 via un rivet central 39 qui est connecté au centre de la résistance chauffante 3.

Le fond du guide cylindrique constitue donc une zone de polarité négative 40 (c'est-à-dire la masse).

Avantageusement, le contact entre la résistance chauffante 3 et la cuvette 5 s'effectue à proximité ou au niveau du bord de l'ouverture de la cuvette 5 par laquelle l'utilisateur accède à la résistance chauffante 3.

Comme représenté, sur la figure 4, le dispositif de sécurité 7 a une forme de lamelle rectangulaire en laiton brut, pliée perpendiculairement à son axe longitudinal pour former un U en coupe longitudinale parallèlement à l'axe 0-0. Cette conformation est adaptée pour que le dispositif de sécurité 7 ne s'appuie pas sur le dessous de la cuvette 3, c'est à dire le bord de la cuvette 3 bordant l'ouverture par laquelle l'utilisateur accède à la résistance chauffante 3, mais sur son flanc. De cette manière le dispositif de sécurité 7 s'appuie sur les zones les moins chaudes de la cuvette 3. Cette géométrie permet également d'avoir un contact dispositif de sécurité 7/cuvette 5 le plus éloigné de la résistance chauffante 3 afin de diminuer la transmission de la chaleur diffusant, par rayonnement, de la résistance chauffante 3 vers le dispositif de sécurité 7.

L'axe longitudinal du dispositif de sécurité 7 s'étend radialement perpendiculairement à l'axe longitudinal 0-0 et au bilame d'alimentation 19.

Le bilame de sécurité 34 a une forme de lamelle rectangulaire qui s'étend également radialement perpendiculairement à l'axe longitudinal 0-0 et au bilame d'alimentation 19.

En fonctionnement normal, le bouchon 1 est enfoncé à l'intérieur du corps de chauffe 11 jusqu'à l'accrochage entre le bilame d'alimentation 19 et la cuvette 5, la résistance chauffante 3 alors alimentée, chauffe. Lorsque la température est suffisante, le bilame d'alimentation 19 se déforme et l'alimentation de la résistance chauffante 3 est coupée. La déformation du bilame d'alimentation 19 permet un relâchement du bouchon 1 qui revient en position de préhension, grâce au ressort 44 (voir figure 3). Un cycle de chauffe normal dure généralement 10 à 20 secondes. Si le bouchon 1 reste enfoncé, le dispositif de sécurité 7 maintient le contact avec la cuvette 5 malgré la déformation du bilame d'alimentation 11. La résistance chauffante continue donc à chauffer. A une température prédéterminée pour que l'allume-cigares et son faisceau électrique d'alimentation ne soient pas endommagés, le bilame de sécurité 34 se déforme et court-circuite l'alimentation de l'allume-cigares en venant au contact de la zone à polarité négative 40. En moins d'une minute, et préférentiellement en moins de 50 secondes, le fusible du circuit électrique de l'allume-cigares fond, préservant ainsi l'intégrité du faisceau électrique.

## Revendications

1. Allume-cigares, notamment pour véhicule automobile, comprenant un corps de chauffe (10) et un bouchon (1) destiné à être engagé dans le corps de chauffe (10), ce bouchon (1) comportant
- une résistance chauffante (3), placée dans une cuvette (5) et apte à être électriquement alimentée par un bilame d'alimentation (19) en contact avec la cuvette (5) lorsque le bouchon (1) est enfoncé en position de chauffe,
- ainsi qu'un dispositif de sécurité (7) maintenant le contact électrique avec la cuvette (5), quelque soit la forme du bilame d'alimentation (19), pour continuer d'alimenter la résistance chauffante (3) tant que le bouchon (1) est enfoncé dans le corps de chauffe (10) en position de chauffe,
**caractérisé par le fait que** le contact électrique entre le dispositif de sécurité (7) et la cuvette (5) s'effectue sur le flanc de la face externe de la cuvette (5).

2. Allume-cigares selon la revendication 1, **caractérisé par le fait que** le contact entre le dispositif de sécurité (7) et la cuvette (5) s'effectue à proximité ou au niveau de la partie de la cuvette (5) ayant le diamètre le plus large.

3. Allume-cigares selon l'une des revendications précédentes, **caractérisé par le fait que** le contact entre la résistance chauffante (3) et la cuvette (5) s'effectue à proximité ou au niveau du bord de l'ouverture de la cuvette (5) par laquelle l'utilisateur accède à la résistance chauffante (3).

4. Allume-cigares selon l'une des revendications précédentes, **caractérisé par le fait que** le dispositif de sécurité (7) a une forme de lame globalement conformée pour avoir une forme de U en coupe longitudinale, le contact électrique entre le dispositif de sécurité (7) et la cuvette (5) s'effectuant au niveau ou à proximité des extrémités longitudinales de la lame.

5. Allume-cigares selon la revendication 4, **caractérisé par le fait que** la partie de la lame correspondant au fond du U est éloignée de la résistance chauffante (3), afin de limiter la transmission de la chaleur émise par la résistance chauffante (3), au dispositif de sécurité (7) en particulier.

6. Allume-cigares selon l'une des revendications précédentes, **caractérisé par le fait que** le dispositif de sécurité (7) est en contact avec un bilame de sécurité (34), agencé pour établir un court circuit dans le circuit électrique de l'allume-cigares, lorsqu'il se déforme sous l'effet de l'excès de chaleur produite au cours d'un dysfonctionnement de l'allume-cigares.

7. Allume-cigares selon l'une des revendications précédentes, **caractérisé par le fait que** le dispositif de sécurité (7) est en laiton brut.
